# EUROPÄISCHE PATENTANMELDUNG

(11) **EP 2 862 689 A1**
(43) Veröffentlichungstag der Anmeldung: **22.04.2015**
(21) Anmeldenummer: 14003551.0
(22) Anmeldetag: 17.10.2014
(51) Int. Cl.: B29C 33/30, B29C 45/26

(54) **Feinzentriereinheit**

(30) Priorität: 18.10.2013 DE 202013009223 U
(71) Anmelder: Strack Norma GmbH & Co. KG, 58511 Lüdenscheid (DE)
(72) Erfinder: Müller, Ludger, 58511 Lüdenscheid (DE); Elftmann, Bernd, 58511 Lüdenscheid (DE)
(74) Vertreter: Draudt, Axel Hermann Christian

(57) **Zusammenfassung**

Die Erfindung betritt eine Feinzentriereinheit (10) für ein Form bildendes Werkzeug, mit einem Zentrierungsoberteil (12), das an einer düsenseitigen ersten Form (14) anbringbar ist, und mit einem Zentrierungsunterteil (16), das an einer auswerferseitigen zweiten Form (18) anbringbar ist, wobei ein Vorsprung (20) des Zentrierungsoberteils (12) von einer Aussparung (22) des Zentrierungs-unterteils (16) im Betrieb aufgenommen und wieder freigegeben wird, wobei sowohl das Zentrierungsoberteil (12) als auch das Zentrierungsunterteil (16) einheitlich zylinderförmig ausgebildet ist und dass beide Teile (12,16) jeweils mittels eines Schraubbolzens (24,26) an den ersten und zweiten Formen (14,18) entlang der Zylinderlängsachse (28) befestigbar sind.

## Beschreibung

Die Erfindung betrifft eine Feinzentriereinheit für ein Form bildendes Werkzeug, mit einem Zentrierungsoberteil, das an einer düsenseitigen ersten Form anbringbar ist, und mit einem Zentrierungsunterteil, das an einer auswerferseitigen zweiten Form anbringbar ist, wobei ein Vorsprung des Zentrierungsoberteils von einer Aussparung des Zentrierungsunterteils im Betrieb aufgenommen und wieder freigegeben wird.

Derartige Feinzentrierungen sind bekannt. So beschreibt zum Beispiel die Seite 18 der Zeitschrift "Der Stahlformenbauer 1/2013" vom Fachverlag-Müller herausgegeben, eine runde Feinzentrierung für einen Formenbau. Darin hat die ARGATHON AG eine noch kleine runde Feinzentrierung entwickelt, und zwar mit der Normenbezeichnung 7992. Der Außendurchmesser misst 20 mm und findet Platz in kleinen Werkzeugabmessungen bis 130 x 130 mm. Oder als Plattenzentrierung in Multikavitätenwerkzeugen.

Dabei wurde auf eine Platz sparende Verschraubung der Zentrierbuchse geachtet, da die Buchse bei der neu entwickelten Norm 7992 über eine Flachkopfschraube mit Schlüsselführung fixiert wird. Die Buchse kann dann von Auge angesetzt und verschraubt werden. Aufgrund der zusätzlichen leichten Freistellung um den Schraubenkopf, muss die Buchse rotativ nicht exakt ausgerichtet sein.

Eine Form wird normalerweise mit Führungssäulen/Buchsenpaarungen zentriert. Hierbei hat die Führungssäule üblicherweise eine "g6" Passung und die Führungsbuchse eine "H7" Passung. Hierdurch ist eine deutliche Spielpassung gegeben, um bei einer Erwärmung der Form ein Klemmverhalten vorzubeugen.

Bei modernen und hochpräzisen Werkzeugen ist es unumgänglich geworden, die Formhälften noch präziser zu führen, als nur mit Führungssäulen, um einen Versatz der Formkonturen vorzubeugen.

Es besteht daher neben der Vorzentrierung durch Säulenbuchsen ein Bedarf daran, diese Säulen/Buchsenpassung noch weiter mittels einer Feinzentrierung zu versehen.

Üblicherweise werden Feinzentrierungen bzw. deren Aufnahmen in der Düsenseite der Form und auch in der Auswerferseite der Form mittels Feinfräsen hergestellt. Diese Passung erfüllt aber nicht die gewünschten Formgenauigkeiten.

Der Erfindung liegt daher die Aufgabe zugrunde, eine Feinzentriereinheit der eingangs genannten Art anzugeben, die mit technisch einfachen Mitteln eine deutliche Verbesserung der Formengenauigkeit und Passform der beiden Hälften ermöglicht.

Diese Aufgabe wird bei einer Feinzentriereinheit der eingangs genannten Art dadurch gelöst, dass sowohl das Zentrierungsoberteil als auch das Zentrierungsunterteil einheitlich zylinderförmig ausgebildet ist und dass beide Teile jeweils mittels eines Schraubbolzens an den ersten und zweiten Formen entlang der Zylinderlängsachse befestigbar sind.

Des weiteren wird diese Aufgabe gelöst mittels eines Zentriersystems mit vier Feinzentriereinheiten nach einem der Ansprüche 1 bis 10, dadurch gekennzeichnet, dass die Zentrieroberteile in der Düsenseite der ersten Form und die Zentrierunterteile in der auswerferseitigen zweiten Form jeweils in gespindelten Bohrungen befestigt sind.

Durch diese Erfindung wird die Teilequalität stark erhöht. Neben der Vorzentrierung durch Säulenbuchsen ist somit zusätzlich auch noch eine Feinzentrierung gegeben.

Um eine möglichst große Kraftübertragung zu gewährleisten, ist es vorteilhaft, wenn der Vorsprung quaderförmig und die Aussparung zur genauen Aufnahme des Vorsprungs ausgebildet sind.

Eine Weiterbildung der Erfindung sieht dabei vor, dass das Zentrieroberteil und das Zentrierunterteil jeweils in den ersten und zweiten Formen mit ersten und zweiten Verdrehsicherungen versehen sind.

Eine Alternative dazu ist dadurch gegeben, dass das Zentraloberteil und das Zentralunterteil jeweils an ihren Böden in Zylinderlängsachsenrichtung in den ersten und zweiten Formen mittels dritten und vierten Verdrehsicherungen versehen sind.

Dabei ist es von Vorteil, wenn die Verdrehsicherungen in entsprechende Aufnahmen aufgenommene Stifte sind.

Je nach Platzgründen für die Montage kann es vorteilhaft sein, dass die ersten und zweiten Schraubbolzen durch den Vorsprung bzw. durch die Aussparung hindurch mit der ersten bzw. mit der zweiten Form verbindbar sind. Es kann aber auch sichergestellt werden, dass die ersten und zweiten Schraubbolzen in die ersten und zweiten Formen in Richtung des Vorsprungs bzw. in Richtung der Aussparung mit der ersten und zweiten Form verbindbar sind.

Damit bei dieser engen Passung dennoch ein gegenseitiges Bewegen von dem Vorsprung und der Aufnahme sichergestellt ist, ist es vorteilhaft, wenn der Vorsprung mit mindestens einer quer zur Zylinderachse verlaufenden Schmiernut versehen ist.

Dabei kann auch noch vorgesehen werden, dass beide Längsseiten des Vorsprungs mit quer zur Zylinderachse verlaufenden Schmiernuten versehen sind.

Schließlich sieht noch eine Weiterbildung der Feinzentriereinheit vor, dass zumindest das Zentrierungsoberteil mit DLC beschichtet ist.

Da erfindungsgemäß mit Hilfe der Feinzentriereinheiten die entsprechenden Bolzen in gespindelten Bohrungen mit den Formen verbunden werden können, ist eine hochgenaue Positionierung dieser Feinzentriereinheiten auf den Formenteilen möglich.

Ferner ist es möglich, dass die gespindelten Bohrungen bei beiden rechteckförmigen Formen gleichmäßig entweder auf den Diagonalen oder auf den Mittelachsen angeordnet sind.

Neben der Vorzentrierung durch Säulenbuchsen ist somit auch eine notwendige Feinzentrierung vorhanden, um die Herstellung der Teile noch passgenauer sicherzustellen.

Für die Feinzentrierung der beiden Formhälften eines Werkzeugs bzw. einer Form werden vier Feinzentriereinheiten benötigt.

Dabei kann die Positionierung im Werkzeug über die Mittelachsen oder über die Diagonalen vom Zentrum der Form ausgehenden Ausdehnungsrichtungen bei Erwärmung der Form erfolgen, um die unterschiedlichen Wärmeausdehnungen der Form zu kompensieren.

Die Feinzentriereinheiten können in unterschiedlichen Abmessungen angeboten werden, um die verschiedenen Formgrößen jeweils die Kräfte aufnehmen zu können.

Gegenüber den bereits üblichen Feinzentrierungen in flacher Ausführung, hat die runde Ausführung Vorteile bei der Einbringung der Bearbeitung im Werkzeug. Die Bohrung kann, wie oben schon gesagt, gespindelt werden und hat somit eine höhere Positioniergenauigkeit im Werkzeug. Zudem haben gespindelte Aufnahmen gegenüber den gefrästen Aufnahmen den Vorteil, dass sie schneller zu fertigen sind und einen Preisvorteil gegenüber einer gefrästen Passung haben.

Weitere Merkmale und Vorteile der Erfindung ergeben sich aus der folgenden Beschreibung eines Ausführungsbeispiels sowie aus den Figuren, auf die Bezug genommen wird. Es zeigen:
- Fig.1: eine Feinjustierungseinheit im eingebauten Zustand, aber geöffneter Formenhälften;
- Fig.2: eine der Figur 1 ähnliche Darstellung mit unterschiedlicher Befestigungsweise der Feinjustiereinheiten in den Formen;
- Fig.3: die in Figur 1 gezeigte Feinzentriereinheit in geschnittener Seitenansicht und in Draufsicht; und
- Fig.4: eine Alternative der in Fig.2 dargestellten Feinjustiereinheiten mit anderen Verdrehsicherungen.

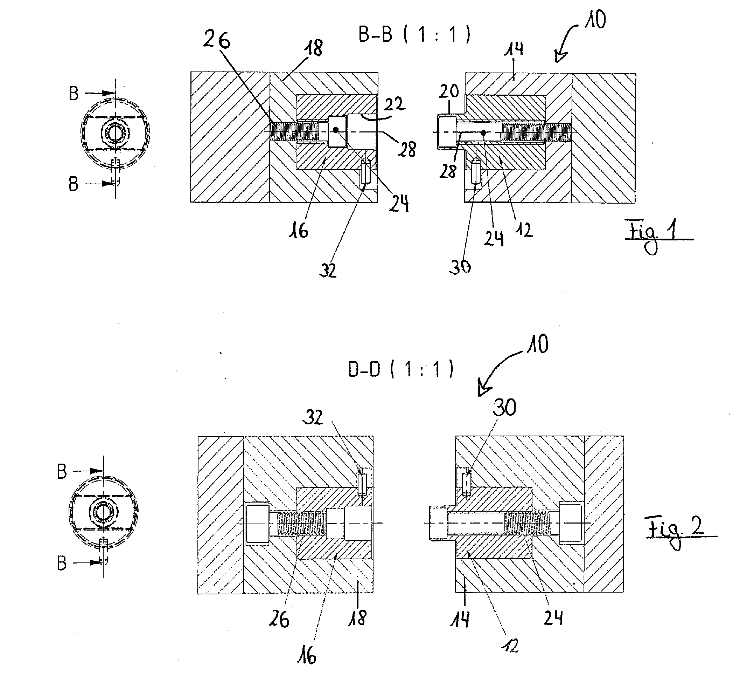

Anhand der Figuren 1 bis 4 wird nunmehr ein Ausführungsbeispiel für eine Feinzentriereinheit 10 bzw. für ein Zentriersystem näher beschrieben. Dabei bedeuten gleiche Bezugszeichen gleiche Merkmale, soweit nichts anderes ausgesagt ist.

Alle Figuren zeigen zumindest eine Feinzentriereinheit 10 für ein Form bildendes Werkzeug oder ein Zentriersystem mit den Feinzentriereinheiten 10.

Die Feinzentriereinheiten weisen ein Zentrieroberteil 12 auf, das an einer düsenseitigen ersten Form 14 befestigt ist, wie beispielsweise aus Figur 1 hervorgeht.

Ein Zentrierungsunterteil 16 ist üblicherweise an einer auswerferseitigen zweiten Form 18 angebracht. Dabei weist das Zentrierungsoberteil 12 einen Vorsprung 20 auf, der in diesem Falle quaderförmig ausgebildet ist. Dieser Vorsprung 20 kann von einer Aussparung 22 des Zentrierungsunterteils 16 im Betrieb aufgenommen oder auch wieder freigegeben werden.

Vorteilhaft ist, wenn sowohl das Zentrieroberteil 12 als auch das Zentrierunterteil 16 einheitlich zylinderförmig ausgebildet sind, und wenn beide Teile 12 und 16 mittels ersten und zweiten Schraubbolzen 24 und 26 an den ersten und zweiten Formen 14 und 18 entlang der Zylinderlängsachse 28 befestigt sind oder werden können.

Durch die Zylinderform der beiden Teile 12 und 16 sowie durch die Anbringung der Schraubbolzen 24 und 26 entlang der Zylindermittelachse ist es nunmehr möglich, sehr genau durch Spindeln die Position der Feinzentriereinheit 10 in den beiden ersten und zweiten Formen 14 und 18 sicherzustellen.

Eine möglichst große Kraftaufnahme ist gegeben durch die Form des Vorsprungs 20 und die entsprechende Form der Aufnahme 22.

Bei dem dargestellten Ausführungsbeispiel ist der Vorsprung 20 quaderförmig ausgebildet und die Aussparung 22 zur genauen Aufnahme des Vorsprungs 20 ausgeformt.

Damit die Positionen der Zentrierungsoberteile und der Zentrierungsunterteile 16 innerhalb der Befestigungsaufnahme sich nicht verändern, sind beide Teile 12 und 16 mittels ersten und zweiten Verdrehsicherungen 30 und 32 versehen und gesichert.

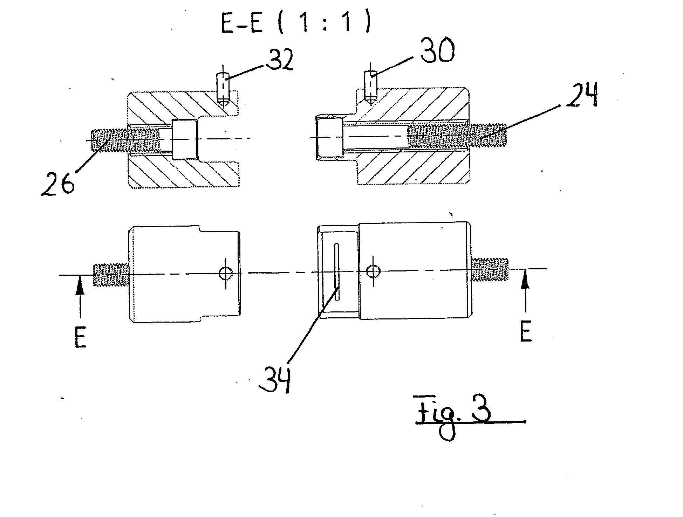

Diese Verdrehsicherungen 30 und 32 befinden sich in kleinen Aussparungen innerhalb der beiden Formen 14 und 18 und greifen in das Zentrieroberteil 12 bzw. in das Zentrierunterteil 16 ein. Beispielsweise sind, wie in Figuren 2 und 3 gezeigt, bei den Stirnseiten der aufeinander zu gerichteten Formen und Zentrierungselementen die Verdrehsicherungen angeordnet.

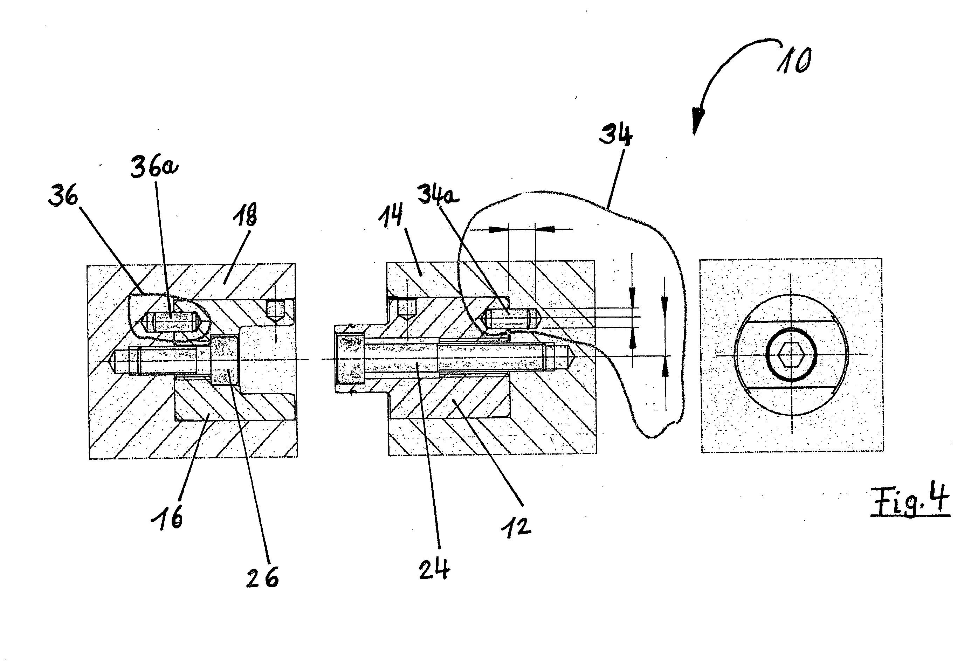

In Fig.4 sind alternative Ausführungsbeispiele einer dritten und vierten Verdrehsicherung 34 und 36 dargestellt. Dabei werden jeweils Bohrungen auf der Unterseite der Zentrierelemente eingebracht, und zwar Stiftbohrungen, jeweils eine in den entsprechenden Elementen. Wie bei den ersten und zweiten Verdrehsicherungen 30 und 32, in welche Stifte eingesetzt sind, werden bei den dritten und vierten Verdrehsicherungen 34 und 36 entsprechende dritte und vierte Stifte 34a und 36a eingesetzt.

Wie sich aus den Figuren 1 und 2 ergibt, kann die Feinzentriereinheit 10 auf zweierlei Arten befestigt werden.

In Figur 1 ist die Befestigungsart derart gestaltet, dass die ersten und zweiten Schraubbolzen 24 und 26 durch den Vorsprung 20 bzw. durch die Aussparung 22 hindurch mit der ersten bzw. mit der zweiten Form 14, 18 verbunden sind.

Die Aufnahme 22 ist dabei so bemessen, dass sie neben den Vorsprung 20 auch noch vollständig den Bolzenkopf aufnehmen kann.

Wie in Figur 1 zu sehen, ist der erste Schraubbolzen 24 innerhalb des Vorsprungs 20 der ersten Form derart eingesetzt, dass der Kopf nicht hervorsteht.

Wie aus der Figur 2 entnehmbar, sind die ersten und zweiten Schraubbolzen 24 und 26 in den ersten und zweiten Formen 14 und 18 sozusagen von hinten in Richtung des Vorsprungs 20 bzw. in Richtung der Aussparung 22 mit den ersten bzw. zweiten Formen 14 und 18 verbunden.

Des weiteren ist es möglich, das Zentrierungsoberteil 12 mit DLC (Diamand like carbon) zu beschichten.

Wie aus den Figuren 1 bis 4 zu sehen, besteht das Zentrierungssystem 50 unter anderem aus vier Feinzentrierungseinheiten 10 nach mindestens einer der oben genannten Art. Dabei sind die Zentrierungsoberteile 12 in der Düsenseite der ersten von Form 14 und die Zentrierunterteile 16 in der Auswerferseite der zweiten Form 18 jeweils in gespindelten Bohrungen befestigt. Diese gespindelten Bohrungen sind bei beiden rechteckförmigen Formen 14 und 18 gleichmäßig entweder auf den Diagonalen oder auf den Mittelachsen angeordnet.

### Bezugszeichenliste:

- 10: Feinzentriereinheit
- 12: Zentrierungsoberteil
- 14: düsenseitige erste Form
- 16: Zentrierungsunterteil
- 18: auswerferseitige zweite Form
- 20: Vorsprung
- 22: Aussparung
- 24: erster Schraubbolzen
- 26: zweiter Schraubbolzen
- 28: Zylinderlängsachse
- 30: erste Verdrehsicherung
- 32: zweite Verdrehsicherung
- 34: dritte Verdrehsicherung
- 36: vierte Verdrehsicherung

## Patentansprüche

1. Feinzentriereinheit (10) für ein Form bildendes Werkzeug, mit einem Zentrierungsoberteil (12), das an einer düsenseitigen ersten Form (14) anbringbar ist, und mit einem Zentrierungsunterteil (16), das an einer auswerferseitigen zweiten Form (18) anbringbar ist, wobei ein Vorsprung (20) des Zentrierungsoberteils (12) von einer Aussparung (22) des Zentrierungsunterteils (16) im Betrieb aufgenommen und wieder freigegeben wird, **dadurch gekennzeichnet, dass** sowohl das Zentrierungsoberteil (12) als auch das Zentrierungsunterteil (16) einheitlich zylinderförmig ausgebildet ist und dass beide Teile (12,16) jeweils mittels eines Schraubbolzens (24,26) an den ersten und zweiten Formen (14,18) entlang der Zylinderlängsachse (28) befestigbar sind.

2. Feinzentriereinheit (10) nach Anspruch 1, **dadurch gekennzeichnet, dass** der Vorsprung (20) quaderförmig und die Aussparung (22) zur genauen Aufnahme des Vorsprungs (20) ausgebildet sind.

3. Feinzentriereinheit (10) nach Anspruch 1 oder 2, **dadurch gekennzeichnet, dass** das Zentrieroberteil (12) und das Zentrierunterteil (16) jeweils in den ersten und zweiten Formen (14,18) mit ersten und zweiten Verdrehsicherungen (30,32) versehen sind.

4. Feinzentriereinheit (10) nach einem der Ansprüche 1 bis 3, **dadurch gekennzeichnet, dass** das Zentraloberteil (12) und das Zentralunterteil jeweils an ihren Böden in Zylinderlängsachenrichtung in den ersten und zweiten Formen (14,18) mittels dritten und vierten Verdrehsicherungen (34,36) versehen sind.

5. Feinzentriereinheit (10) nach einem der Ansprüche 3 oder 4, **dadurch gekennzeichnet, dass** die Verdrehsicherungen (30,32,34,36) in entsprechenden Aufnahmen aufgenommene Stifte (30a,32a,34a,36a) sind.

6. Feinzentriereinheit (10) nach einem der Ansprüche 1 bis 5, **dadurch gekennzeichnet, dass** die ersten und zweiten Schraubbolzen (24,26) durch den Vorsprung (20) bzw. durch die Aussparung (22) hindurch mit der ersten bzw. mit der zweiten Form (14,18) verbunden sind.

7. Feinzentriereinheit (10) nach einem der Ansprüche 1 bis 6, **dadurch gekennzeichnet, dass** die ersten und zweiten Schraubbolzen (24,26) in die ersten und zweiten Formen (14,18) in Richtung des Vorsprungs (20) bzw. in Richtung der Aussparung (22) mit der ersten bzw. zweiten Form (14,18) verbunden sind.

8. Feinzentriereinheit (10) nach einem der Ansprüche 1 bis 7, **dadurch gekennzeichnet, dass** der Vorsprung (20) mit mindestens einer quer zur Zylinderachse (28) verlaufenden Schmiernut (34) versehen ist.

9. Feinzentriereinheit (10) nach Anspruch 8, **dadurch gekennzeichnet, dass** beide Längsseiten des Vorsprungs (20) mit quer zur Zylinderachse (28) verlaufenden Schmiernuten (34) versehen sind.

10. Feinzentriereinheit (10) nach einem der Ansprüche 1 bis 9, **dadurch gekennzeichnet, dass** zumindest das Zentrierungsoberteil (12) mit DLC beschichtet ist.

11. Zentriersystem (50) mit vier Feinzentriereinheiten (10) nach einem der Ansprüche 1 bis 10, **dadurch gekennzeichnet, dass** die Zentrieroberteile (12) in der Düsenseite der ersten Form (14) und die Zentrierunterteile (16) in der auswerferseitigen zweiten Form (18) jeweils in gespindelten Bohrungen befestigt sind.

12. Zentriersystem (50) nach Anspruch 11, **dadurch gekennzeichnet, dass** die gespindelten Bohrungen bei beiden rechteckförmigen Formen (14,18) gleichmäßig entweder auf den Diagonalen oder auf den Mittelachsen angeordnet sind.
